# EUROPEAN PATENT SPECIFICATION

(11) **EP 4 336 637 B1**
(45) Date of publication and mention of the grant of the patent: **23.09.2026**
(21) Application number: 23803734.5
(22) Date of filing: 28.04.2023
(51) Int. Cl.: H01M 50/242, H01M 50/209, H01M 50/233, H01M 50/264, H01M 50/211, H01M 50/262

(54) **LIGHTWEIGHT BATTERY MODULE HOUSING HAVING IMPROVED RIGIDITY, AND BATTERY PACK INCLUDING SAME**
LEICHTES BATTERIEMODULGEHÄUSE MIT VERBESSERTER STEIFIGKEIT UND BATTERIEPACK DAMIT
BOÎTIER DE MODULE DE BATTERIE LÉGER AYANT UNE RIGIDITÉ AMÉLIORÉE, ET BLOC-BATTERIE LE COMPRENANT

(30) Priority: 10.05.2022 KR 20220057074
(43) Date of publication of application: 13.03.2024
(73) Proprietor: LG Energy Solution, Ltd., Seoul 07335 (KR)
(72) Inventor: JU, Eun Ah, Daejeon 34122 (KR); SEO, Sung Won, Daejeon 34122 (KR); YUN, Hyeon Ki, Daejeon 34122 (KR); TANNENBERGER, Guenter, 85123 Pobenhausen (DE); HARASZTOSI, Uwe, 74172 Neckarsulm (DE); WASSERMANN, Thomas, 85290 Geisenfeld (DE)
(74) Representative: Plasseraud IP
(86) International application number: PCT/KR2023/005854
(87) International publication number: WO 2023/219311

(56) References cited:
- WO-A1-2019/021912
- CN-A- 108 475 746
- KR-A- 20120 132 952
- KR-A- 20180 010 989
- KR-A- 20200 112 246
- KR-A- 20200 112 246
- KR-A- 20200 130 677
- KR-A- 20220 053 312
- US-B2- 11 264 670

## Description

### [Technical Field]

This application claims the benefit of priority to Korean Patent Application No. 2022-0057074 filed on May 10, 2022.

The present invention relates to a battery module housing and a battery pack including the same. More particularly, the present invention relates to a lightweight battery module housing with improved rigidity capable of relieving pressure due to expansion of a battery cell and allowing a plurality of battery modules to be coupled to each other and a battery pack including the same.

### [Background Art]

Lithium secondary batteries, which are rechargeable and have high energy density, have attracted attention as a new energy source with environmentally-friendly characteristics not only because the lithium secondary batteries can drastically reduce the use of fossil fuels but also because the lithium secondary batteries do not generate by-products from the use of energy.

Lithium secondary batteries are in the limelight as an energy source for devices having high output and high energy density, such as electric vehicles, as well as wearable devices or portable devices.

In order to be used as an energy source with such high output and high energy density, a plurality of lithium secondary batteries is received in a housing so as to be configured in the form of a battery module and a battery pack.

Since an active material layer of the lithium secondary battery expands and contracts during the charging and discharging process, the volume of a battery cell increases and decreases, and change in the volume of the battery cell may cause deformation of the battery module and the battery pack. Therefore, a structure to buffer volume change of the battery cell is required.

In addition, various structural modifications have been made to omit or replace components, such as a crossbeam and a battery pack top plate, constituting a conventional battery pack in order to produce a battery pack having high energy density.

In connection therewith, Patent Document 1 discloses a battery module including a module housing having a square tubular shape forming an internal space configured to receive battery cells and fastening flanges extending in a horizontal direction from upper areas on opposite sides of the module housing.

The battery module of Patent Document 1 discloses a configuration for protecting the battery cells from external impact by attaching a shock absorber to an outer surface of a side part of the module housing; however, the shock absorber is a separate member from the module housing and requires coupling of the shock absorber to the module housing. During assembly of a battery pack, therefore, members, such as a rigid beam and a pack cover, are provided.

Patent Document 2 discloses a battery module comprising a U-shaped frame configured to receive a battery cell stack, the U-shaped frame having an open top, a top plate configured to cover the battery cell stack on the open top of the U-shaped frame, and a side portion having a depression inwardly recessed toward the battery cell stack.

In Patent Document 2, an elastic member configured to apply elastic force to the depression in a stacking direction of battery cells is included, whereby it is possible to absorb pressure caused by expansion of the battery cells.

However, the battery module of Patent Document 2 does not provide a structure for coupling a plurality of battery modules to each other and includes a separate elastic member provided inside the frame in order to absorb the expansion of the battery cells, whereby the size of the battery module increases by the volume of the elastic member.

Therefore, there is a need for a structure that allows a battery pack to be manufactured with a minimal configuration to increase energy density without increasing the volume of a battery module although a configuration to buffer volume change due to expansion of battery cells is included.

### (Prior Art Documents)

(Patent Document 1) Korean Patent Application Publication No. 2020-0112246 (2020.10.05)
(Patent Document 2) Korean Patent Application Publication No. 2021-0053086 (2021.05.11)

Document WO 2019/021912 A1 relates to a bonded battery module having a plurality of battery modules coupled to each other. Document KR 2020 0112246 A discusses a battery module for increasing space utilization and securing mechanical rigidity.

### [Disclosure]

### [Technical Problem]

The present invention has been made in view of the above problems, and it is an object of the present invention to provide a battery module housing capable of absorbing volume expansion of a battery cell, thereby inhibiting change in size of a battery module, and constituting a battery pack in which a plurality of battery modules is stably coupled to each other and a battery pack including the same.

### [Technical Solution]

The above mentioned problem is solved with a battery module housing according to claim 1.

The bolting portion may be located at an upper end and a lower end of each of the first side surface and the second side surface.

The bolting portion may have a structure in which a through-hole is formed in a fastening portion, the through-hole extending perpendicularly to the first side surface and the second side surface.

The fastening portion may be formed in an overall length direction of the receiving portion.

According to claim 1, the buffer portion has a structure in which a buffer structure projecting in an overall width direction parallel to an expansion direction of the battery cell stack is provided on at least one of the first side surface and the second side surface.

Still according to claim 1, the buffer structure includes a cushion portion having a vertical sectional shape of a horseshoe.

The battery module housing may further comprise a guard outside the cushion portion.

The buffer structure may be formed in the overall length direction of the receiving portion.

The thickness of each of the first side surface and the second side surface may be gradually decreased from a central part to an upper end and a lower end thereof.

The projecting height of the buffer portion may be less than or equal to the projecting height of the bolting portion.

The receiving portion may further include an upper surface and a lower surface, and each of the upper surface and a lower surface may have a hollow therein.

The receiving portion, the bolting portion, and the buffer portion may be manufactured by extrusion molding of a metal.

The present invention provides a battery pack configured such that battery modules, each of which includes the battery module housing, are connected to each other in a horizontal direction.

In addition, the present invention may provide various combinations of the above constructions.

### [Advantageous Effects]

As is apparent from the above description, a battery module housing according to the present invention is capable of absorbing volume expansion of a battery cell stack through a buffer portion integrated with a receiving portion.

In addition, a bolting portion, which is a connection structure between a plurality of battery module housings, and a buffer portion, which is a volume expansion accommodation structure, are provided on a first side surface and a second side surface so as to project therefrom, whereby it is possible to minimize an increase in volume of the battery module housing.

In addition, the battery module housing is capable of replacing a battery pack housing when a battery pack is manufactured, whereby it is possible to minimize the number of parts of the battery pack.

### [Description of Drawings]

FIG. 1 is a perspective view of a battery module according to a first embodiment.
FIG. 2 is a front view of a battery module housing of FIG. 1.
FIG. 3 is a perspective view of a battery module according to a second embodiment.
FIG. 4 is a front view of a battery module housing of FIG. 3.
FIG. 5 is a perspective view showing the state in which battery modules, one of which is shown in FIG. 1, are disposed adjacent to each other.
FIG. 6 is a perspective view of a battery pack according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the accompanying drawings.

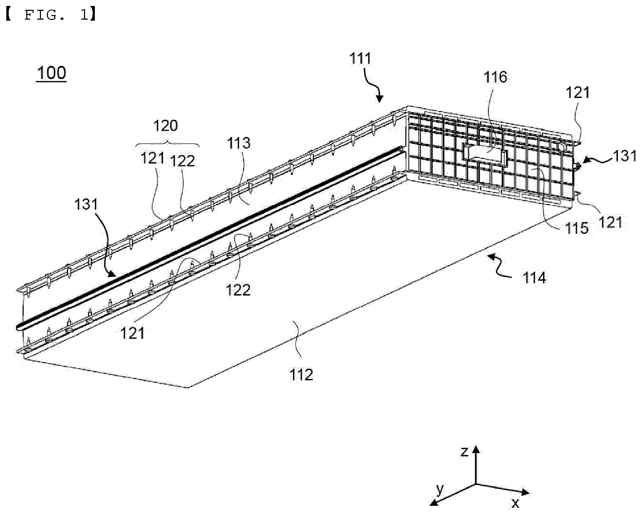

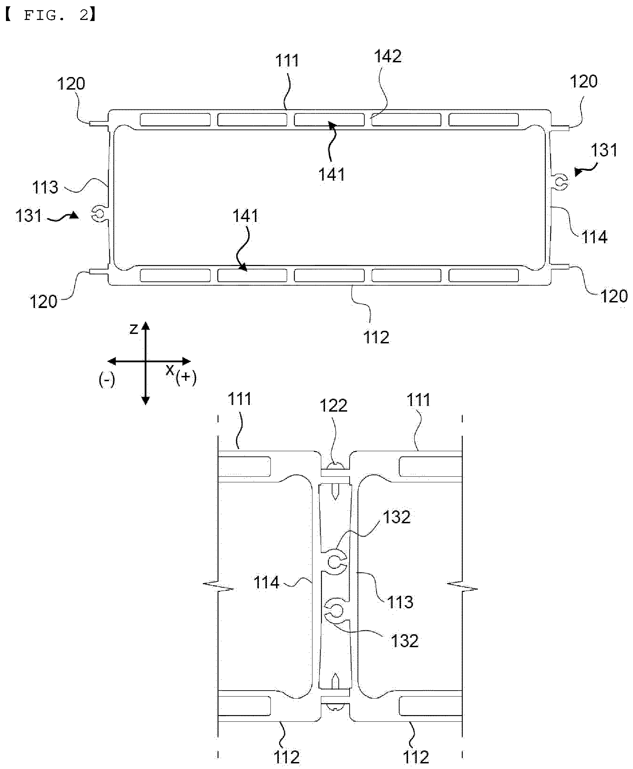

FIG. 1 is a perspective view of a battery module according to a first embodiment, and FIG. 2 is a front view of a battery module housing of FIG. 1.

Referring to FIGs. 1 and 2, the battery module 100 is configured such that a battery cell stack constituted by a plurality of battery cells disposed in tight contact with each other is received in a battery module housing, and the battery cell stack is disposed in a space defined between a first side surface 113 and a second side surface 114 of a receiving portion.

The battery module housing includes a receiving portion formed in the shape of a quadrangular prism monoframe configured such that an upper surface 111, a lower surface 112, a first side surface 113, and a second side surface 114 are vertically joined to each other, a bolting portion 120 for coupling between battery module housings that are disposed adjacent to each other, and a buffer portion 131 configured to absorb volume expansion of the battery cell stack.

An end plate 115 is added to each of opposite ends of the receiving portion in an overall length direction y in order to seal the receiving portion, and a module terminal 116 is located at the end plate 115 so as to project outwards therefrom.

The bolting portion 120 is a part configured to allow a screw 122 to be fastened thereto when a plurality of battery modules is coupled to each other in a state of being disposed side by side in an overall width direction x, and is located at an upper end and a lower end of each of the first side surface 113 and the second side surface 114.

The bolting portion 120 is configured to have a structure in which a through-hole is formed in a fastening portion 121 extending perpendicularly to the first side surface 113 and the second side surface 114, and a nut may be fastened to the screw 122, which is inserted into the through-hole, whereby coupling between the battery modules may be achieved.

Specifically, nut fastening is difficult in the state in which the battery modules are located adjacent to each other and the fastening portions overlap each other. After a nut is welded in advance to any one of the battery modules disposed adjacent to each other such that the fastening portions overlap each other, therefore, bolting engagement may be performed thereto, whereby the battery modules may be coupled to each other.

Alternatively, a method of inserting a rivet stud/nut into the through-hole of the fastening portion so as to be fastened or a method of inserting a flow drill screw into the through-hole so as to be fastened may be used as a method of coupling the battery modules to each other.

When coupling between the battery modules is described in the following description, the screw includes a screw and a rivet that is inserted into the through-hole of the fastening portion 121, and the kind of the screw is not restricted.

The fastening portion 121 is formed in the overall length direction y of the receiving portion. FIG. 1 shows a structure in which the fastening portion 121 is continuously formed in the overall length direction y. Unlike this, however, the fastening portion 121 may be discontinuously formed in the overall length direction y.

The battery cell stack may be configured such that a plurality of pouch-shaped battery cells is arranged in tight contact with each other, and the plurality of pouch-shaped battery cells may be disposed such that an electrode plane is parallel to a yz plane. At this time, a direction in which the volume of each of the pouch-shaped battery cells is expanded and reduced during charging and discharging of the battery module is identical to the overall width direction x.

In the present invention, therefore, a buffer portion 131 is provided as a means configured to relieve pressure due to volume expansion of the pouch-shaped battery cells. Specifically, the buffer portion 131 may have a structure in which a buffer structure projecting in the overall width direction x is provided on at least one of the first side surface 113 and the second side surface 114 constituting opposite end surfaces of the battery module housing in the overall width direction x.

In FIGs. 1 and 2, therefore, one buffer portion 131 is formed at each of the first side surface 113 and the second side surface 114, and the buffer portion 131 of the first side surface 113 and the buffer portion 131 of the second side surface 114 are located at different positions in a z direction.

When two or more battery modules are disposed in the overall width direction x and are connected to each other, therefore, the buffer portion 131 of the first side surface 113 and the buffer portion 131 of the second side surface 114 may not overlap each other and may be disposed at different positions.

The buffer structure includes a cushion portion 132 formed in the vertical sectional shape of a horseshoe. As shown in a lower part of FIG. 2, therefore, the battery module housings are coupled to each other by fastening using the screw 122 and the left battery module housing expands in a (+) x direction while the right battery module housing expands in a (-) x direction as the result of expansion of the battery cells, the buffer portion 131 is deformed such that the x-direction size of the buffer portion is decreased and the z-direction size of the buffer portion is increased. That is, the buffer portion 131 may serves as a cushion or a spring that absorbs the volume expansion of the battery module housing.

The buffer structure is formed in the overall length direction y of the receiving portion. FIG. 1 shows a structure in which the buffer portion 131 is continuously formed in the overall length direction y. Unlike this, however, the buffer portion 131 may be discontinuously formed in the overall length direction y.

In a concrete example, the thickness of each of the first side surface 113 and the second side surface 114 may be gradually decreased from a central part to an upper end and a lower end thereof in the z direction. In consideration of the fact that deformation of the battery module housing due to the volume expansion thereof occurs in the x direction and deformation of the central part in the z direction is greatest, the thickness of the central part in the z direction may be formed so as to be relatively large, whereby it is possible to minimize deformation of the battery module housing.

In the battery module housing according to the present invention, the bolting portion 120 is formed at each of the first surface 113 and the second surface 114, the buffer portion 131 is provided on at least one of the first surface 113 and the second surface 114, and the bolting portions 120 and the buffer portions 131 are disposed so as not to overlap each other at the first surface 113 and the second surface 114. Consequently, it is possible to form a structure capable of minimizing an increase in external size of the battery module housing even though both the structure for coupling between the battery modules and the structure for relieving the volume expansion are included.

Meanwhile, the x-direction length of the buffer portion 131 is formed so as to be less than the x-direction length of the bolting portion 120. In the state in which two or more battery module housings are coupled to each other and the battery cells do not expand, therefore, the buffer portion 131 is spaced apart from the first side surface or the second side surface of the battery module housing adjacent thereto by a predetermined distance without contact therewith.

That is, the battery module housings are coupled in the state in which the battery cells do not expand, i.e. in the state in which no pressure is applied to the buffer portion 131, and when the battery cells expand, the first side surface or the second side surface of the battery module housing adjacent to the buffer portion starts to come into contact with the buffer portion, and the buffer portion may be pressed soon after.

In addition, although the first side surface 113 and the second side surface 114 expand by the x-direction length of the bolting portion 120, it is possible to prevent an increase in the size of all of the battery modules in the overall width direction x in the state in which the plurality of battery modules is coupled to each other as the result of the screw being fastened to the bolting portion 120.

The battery module housing according to the present invention is configured to have a structure in which a hollow 141 is formed in each of the upper surface 111 and the lower surface 112, and therefore it is possible to reduce the weight of the battery module housing by the weight of the part removed as the result of forming the hollow. In addition, each of the upper surface 111 and the lower surface 112 is configured to have a structure in which partition walls 142 are provided in the thickness direction z and the hollow 141 is defined between the partition walls 142, whereby it is possible to secure rigidity of the battery module housing by the provision of the partition walls 142.

The battery module housing is configured to have an integrated structure manufactured by extrusion molding of metal, and therefore the receiving portion, the bolting portion, and the buffer portion may be integrated into a single body.

The metal may include aluminum, carbon steel, stainless steel, and an alloy thereof.

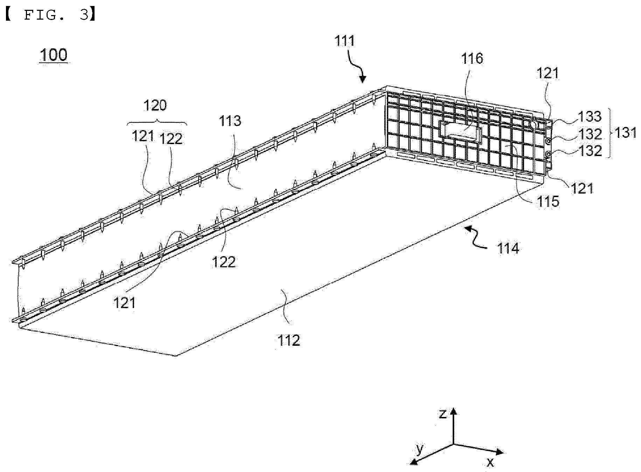

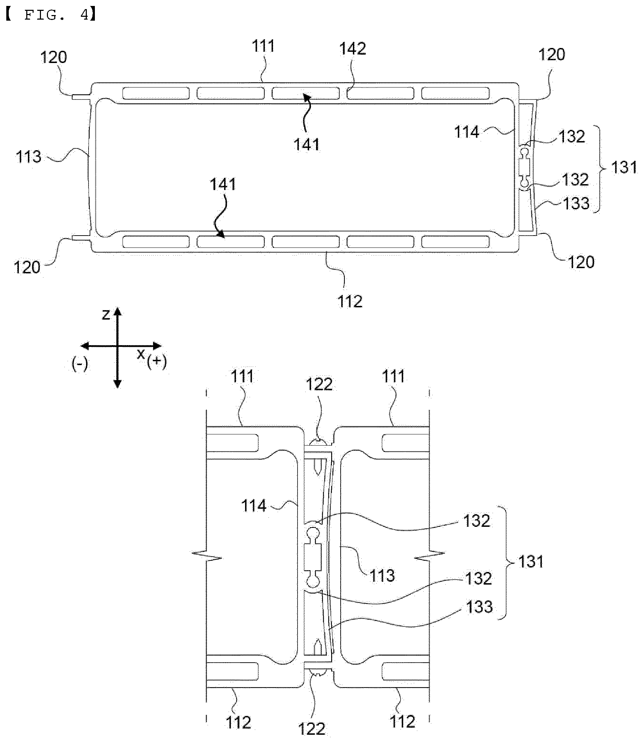

FIG. 3 is a perspective view of a battery module according to a second embodiment, and FIG. 4 is a front view of a battery module housing of FIG. 3.

Referring to FIGs. 3 and 4, the battery module housing of the battery module according to the second embodiment is different from the battery module housing according to the first embodiment in that a guard 133 is further provided outside a cushion portion 132 formed in the vertical sectional shape of a horseshoe constituting a buffer portion 131.

Also, in the battery module housing shown in FIGs. 3 and 4, no buffer portion 131 is formed at a first side surface 113, and the buffer portion 131 is formed only at a second side surface 114. The buffer portion 131 formed only at the second side surface 114 includes two cushion portions 132, each of which is formed in the vertical sectional shape of a horseshoe, and a guard 133. A receiving portion, the buffer portion 131 including the cushion portions 132 and the guard 133, and a bolting portion 120 are configured to have an integrated structure manufactured by extrusion molding of metal.

When two battery module housings are connected to each other by fastening using a screw 122, as shown in a lower part of FIG. 4, the second side surface 114 of the left battery module housing and the first side surface 113 of the right battery module housing are coupled to each other in a state of being disposed adjacent to each other, and the guard 133 of the second side surface 114 of the left battery module housing is coupled to the first side surface 113 of the right battery module housing in a state of being spaced apart therefrom. When the battery module housings expand in the x direction, therefore, the expanded volume may be accommodated in the buffer portion 131 and the space.

A description of the battery module according to the first embodiment and the battery module housing may be equally applied to the other construction of the battery module according to the second embodiment and the battery module housing.

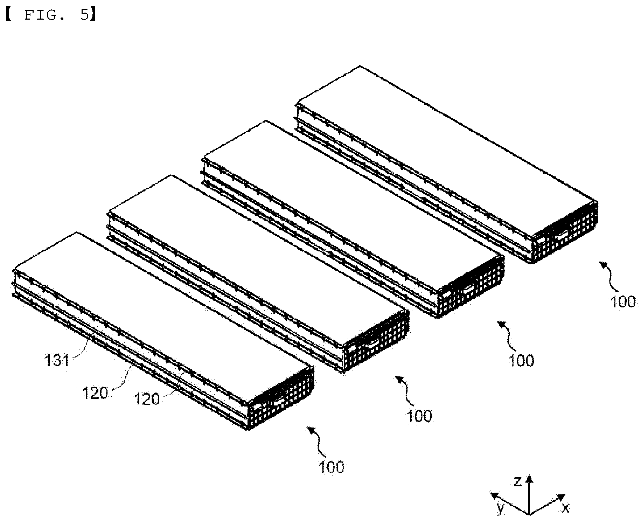

FIG. 5 is a perspective view showing the state in which battery modules, one of which is shown in FIG. 1, are disposed adjacent to each other.

Referring to FIG. 5, the battery modules 100, each of which includes the battery module housing, are disposed adjacent to each other in a horizontal direction x, and the screw may be fastened to the bolting portion 120 of the battery module housing, whereby it is possible to manufacture a battery pack including a plurality of battery modules connected to each other. Since the battery modules 100 are connected to each other such that the buffer portion 131 is disposed between the first side surface and the second side surface of the battery modules 100, the volume of the battery modules expanded in the x direction may accommodated in the buffer portion 131.

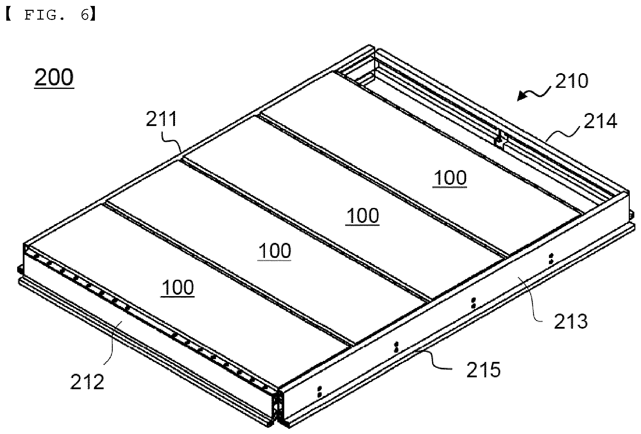

FIG. 6 is a perspective view of a battery pack according to the present invention.

Referring to FIG. 6, the battery pack 200 has a structure in which an upper surface and a lower surface of each of battery module housings are exposed in the state in which a plurality of battery modules 100 is mounted in a battery pack frame 210.

The battery module housing according to the present invention has a structure in which a partition wall and a hollow are formed in each of the upper surface and the lower surface of the battery module housing, whereby rigidity of the battery module housing is improved, i.e. the strength of the battery module housing against external impact is improved. Consequently, the battery module housing may replace a top plate and a pack tray of the battery pack, and therefore no separate top plate and pack tray are necessary during assembly of the battery pack. In addition, when the battery modules are coupled to each other via the bolting portion and the buffer portion constituted by the cushion portions and the guard, the bolting portion and the buffer portion may serve as a conventional battery pack crossbeam, and therefore it is also possible to omit a crossbeam from the battery pack according to the present invention.

The battery pack frame 210 may be constituted by a first member 211, a second member 212, a third member 213, and a fourth member 214 connected to each other so as to be perpendicular to each other, and the first member 211, the second member 212, the third member 213, and the fourth member 214 may be separate members configured to be detachably coupled to each other.

Meanwhile, a mounting portion 215 for mounting the battery pack in a device may be necessary, and the mounting portion 215 may be provided at a lower end of at least one of the first member 211, the second member 212, the third member 213, and the fourth member 214. Consequently, no separate part for mounting the battery pack in a device is necessary.

When the battery module housing according to the present invention is used, as described above, it is possible to accommodate deformation of a battery cell stack due to expansion thereof, to simply couple a plurality of battery modules to each other, and to reduce the number of parts constituting the battery pack, whereby rigidity of the battery pack may be improved while the weight of the battery pack is reduced.

### (Description of Reference Numerals)

- 100:: Battery module
- 111:: Upper surface
- 112:: Lower surface
- 113:: First side surface
- 114:: Second side surface
- 115:: End plate
- 116:: Module terminal
- 120:: Bolting portion
- 121:: Fastening portion
- 122:: Screw
- 131:: Buffer portion
- 132:: Cushion portion
- 133:: Guard
- 141:: Hollow
- 142:: Partition wall
- 200:: Battery pack
- 210:: Battery pack frame
- 211:: First member
- 212:: Second member
- 213:: Third member
- 214:: Fourth member
- 215:: Mounting portion

## Claims

1. A battery module housing comprising:
a receiving portion configured to allow a battery cell stack to be mounted therein, the receiving portion comprising a first side surface (113) and a second side surface (114);
a bolting portion (120) configured to couple battery module housings disposed adjacent to each other; and
a buffer portion (131) configured to absorb volume expansion of the battery cell stack,
**characterized in that** the buffer portion (131) has a structure in which a buffer structure projecting in an overall width direction parallel to an expansion direction of the battery cell stack is provided on at least one of the first side surface (113) and the second side surface (114)such that, when the battery cells expand, the first side surface or the second side surface of the battery module housing adjacent to the buffer portion (131) starts to come into contact with the buffer portion (131); and
wherein the buffer structure comprises a cushion portion (132) having a vertical sectional shape of a horseshoe.

2. The battery module housing according to claim 1, wherein the bolting portion (120) is located at an upper end and a lower end of each of the first side surface (113) and the second side surface (114).

3. The battery module housing according to claim 2, wherein the bolting portion (120) has a structure in which a through-hole is formed in a fastening portion (121), the through-hole extending perpendicularly to the first side surface (113) and the second side surface (114).

4. The battery module housing according to claim 3, wherein the fastening portion (121) is formed in an overall length direction of the receiving portion.

5. The battery module housing according to claim 4, wherein the battery module housing further comprises a guard (133) outside the cushion portion (132).

6. The battery module housing according to claim 3, wherein the buffer structure is formed in an overall length direction of the receiving portion.

7. The battery module housing according to claim 1, wherein a thickness of each of the first side surface (113) and the second side surface (114) is gradually decreased from a central part to an upper end and a lower end thereof.

8. The battery module housing according to claim 1, wherein a projecting height of the buffer portion (131) is less than or equal to a projecting height of the bolting portion (120).

9. The battery module housing according to claim 1, wherein
the receiving portion further comprises an upper surface (111) and a lower surface (112), and
each of the upper surface (111) and a lower surface (112) has a hollow therein.

10. The battery module housing according to claim 1, wherein the receiving portion, the bolting portion (120), and the buffer portion (131) are manufactured by extrusion molding of a metal.

11. A battery pack (200) configured such that battery modules (100), each of which comprises the battery module housing according to any one of claims 1 to 10, are connected to each other in a horizontal direction.

## Patentansprüche

1. Batteriemodulgehäuse, umfassend:
einen Aufnahmeabschnitt, der so ausgelegt ist, dass darin ein Batteriezellenstapel montiert werden kann, wobei der Aufnahmeabschnitt eine erste Seitenfläche (113) und eine zweite Seitenfläche (114) umfasst;
einen Verschraubungsabschnitt (120), der dazu ausgelegt ist, benachbart zueinander angeordnete Batteriemodulgehäuse zu koppeln; und
einen Pufferabschnitt (131), der dazu ausgelegt ist, eine Volumenausdehnung des Batteriezellenstapels zu absorbieren,
**dadurch gekennzeichnet, dass** der Pufferabschnitt (131) eine Struktur aufweist, bei der eine Pufferstruktur, die in einer Gesamtbreitenrichtung parallel zu einer Ausdehnungsrichtung des Batteriezellenstapels vorsteht, an mindestens einer aus der ersten Seitenfläche (113) und der zweiten Seitenfläche (114) so vorgesehen ist, dass der Pufferabschnitt zwischen benachbarten gekoppelten Batteriemodulgehäusen angeordnet ist; und
wobei die Pufferstruktur einen Polsterabschnitt (132) mit der vertikalen Querschnittsform eines Hufeisens umfasst.

2. Batteriemodulgehäuse nach Anspruch 1, wobei der Verschraubungsabschnitt (120) an einem oberen Ende und einem unteren Ende jeder der ersten Seitenfläche (113) und der zweiten Seitenfläche (114) angeordnet ist.

3. Batteriemodulgehäuse nach Anspruch 2, wobei der Verschraubungsabschnitt (120) eine Struktur aufweist, bei der ein Durchgangsloch in einem Befestigungsabschnitt (121) ausgebildet ist, wobei sich das Durchgangsloch senkrecht zur ersten Seitenfläche (113) und zur zweiten Seitenfläche (114) erstreckt.

4. Batteriemodulgehäuse nach Anspruch 3, wobei der Befestigungsabschnitt (121) in einer Gesamtlängenrichtung des Aufnahmeabschnitts ausgebildet ist.

5. Batteriemodulgehäuse nach Anspruch 4, wobei das Batteriemodulgehäuse ferner eine Schutzvorrichtung (133) außerhalb des Polsterabschnitts (132) umfasst.

6. Batteriemodulgehäuse nach Anspruch 3, wobei die Pufferstruktur in einer Gesamtlängenrichtung des Aufnahmeabschnitts ausgebildet ist.

7. Batteriemodulgehäuse nach Anspruch 1, wobei eine Dicke jeder der ersten Seitenfläche (113) und der zweiten Seitenfläche (114) von einem mittleren Teil zu einem oberen Ende und einem unteren Ende davon allmählich abnimmt.

8. Batteriemodulgehäuse nach Anspruch 1, wobei eine vorstehende Höhe des Pufferabschnitts (131) kleiner oder gleich einer vorstehenden Höhe des Verschraubungsabschnitts (120) ist.

9. Batteriemodulgehäuse nach Anspruch 1, wobei
der Aufnahmeabschnitt ferner eine obere Fläche (111) und eine untere Fläche (112) umfasst, und
jede der oberen Fläche (111) und der unteren Fläche (112) einen Hohlraum darin aufweist.

10. Batteriemodulgehäuse nach Anspruch 1, wobei der Aufnahmeabschnitt, der Verschraubungsabschnitt (120) und der Pufferabschnitt (131) durch Strangpressen eines Metalls hergestellt sind.

11. Batteriepack (200), das so ausgelegt ist, dass Batteriemodule (100), von denen jedes das Batteriemodulgehäuse nach einem der Ansprüche 1 bis 10 umfasst, in einer horizontalen Richtung miteinander verbunden sind.

## Revendications

1. Boîtier de module de batterie comprenant :
une partie de réception configurée pour permettre à un empilement d'éléments de batterie d'y être monté, la partie de réception comprenant une première surface latérale (113) et une seconde surface latérale (114) ;
une partie de boulonnage (120) configurée pour coupler des boîtiers de module de batterie disposés adjacents l'un à l'autre ; et
une partie tampon (131) configurée pour absorber l'expansion de volume de l'empilement d'éléments de batterie,
**caractérisé en ce que** la partie tampon (131) a une structure dans laquelle une structure tampon faisant saillie dans une direction de largeur parallèle à une direction d'expansion de l'empilement d'éléments de batterie est prévue sur au moins l'une de la première surface latérale (113) et de la seconde surface latérale (114), de sorte que, lorsque l'élément de batterie s'élargit, la première surface latérale ou la seconde surface latérale commence à entrer en contact avec la partie tampon (131), et
dans lequel la structure tampon comprend une partie d'amortissement (132) ayant une forme en coupe verticale de fer à cheval.

2. Boîtier de module de batterie selon la revendication 1, dans lequel la partie de boulonnage (120) est située à une extrémité supérieure et à une extrémité inférieure de chacune de la première surface latérale (113) et de la seconde surface latérale (114).

3. Boîtier de module de batterie selon la revendication 2, dans lequel la partie de boulonnage (120) a une structure dans laquelle un trou traversant est formé dans une partie de fixation (121), le trou traversant s'étendant perpendiculairement à la première surface latérale (113) et à la seconde surface latérale (114).

4. Boîtier de module de batterie selon la revendication 3, dans lequel la partie de fixation (121) est formée dans une direction de la longueur hors tout de la partie de réception.

5. Boîtier de module de batterie selon la revendication 4, dans lequel le boîtier de module de batterie comprend en outre une protection (133) à l'extérieur de la partie d'amortissement (132).

6. Boîtier de module de batterie selon la revendication 3, dans lequel la structure tampon est formée dans une direction de la longueur hors tout de la partie de réception.

7. Boîtier de module de batterie selon la revendication 1, dans lequel une épaisseur de chacune de la première surface latérale (113) et de la seconde surface latérale (114) diminue progressivement d'une partie centrale vers une extrémité supérieure et une extrémité inférieure de celles-ci.

8. Boîtier de module de batterie selon la revendication 1, dans lequel une hauteur en saillie de la partie tampon (131) est inférieure ou égale à une hauteur en saillie de la partie de boulonnage (120).

9. Boîtier de module de batterie selon la revendication 1, dans lequel la partie de réception comprend en outre une surface supérieure (111) et une surface inférieure (112), et chacune de la surface supérieure (111) et de la surface inférieure (112) présente un évidement en son sein.

10. Boîtier de module de batterie selon la revendication 1, dans lequel la partie de réception, la partie de boulonnage (120), et la partie tampon (131) sont fabriquées par moulage par extrusion d'un métal.

11. Bloc-batterie (200) configuré de telle sorte que des modules de batterie (100), dont chacun comprend le boîtier de module de batterie selon l'une quelconque des revendications 1 à 10, sont connectés les uns aux autres dans une direction horizontale.
